# EUROPÄISCHE PATENTSCHRIFT

(11) **EP 0 448 505 B1**
(45) Veröffentlichungstag und Bekanntmachung des Hinweises auf die Patenterteilung: **18.10.1995**
(21) Anmeldenummer: 91810044.7
(22) Anmeldetag: 21.01.1991
(51) Int. Cl.: H02P 7/14

(54) **Batteriebetriebene Einrichtung**
Battery driven device
Dispositif entraîné pour une batterie

(30) Priorität: 23.03.1990 DE 4009402
(43) Veröffentlichungstag der Anmeldung: 25.09.1991
(73) Patentinhaber: HILTI Aktiengesellschaft, 9494 Schaan (LI)
(72) Erfinder: Karl, Echtler, Dr., W-8039 Puchheim (DE); Hanno, Richter, W-8025 Unterhaching (DE); Wolfgang, Millauer, W-8000 München 60 (DE)
(74) Vertreter: Wildi, Roland

(56) Entgegenhaltungen:
- BE-A- 674 057
- DE-A- 2 851 841
- GB-A- 1 395 508
- US-A- 2 353 410

## Beschreibung

Die Erfindung bezieht sich auf eine batteriebetriebene Einrichtung gemäß dem Oberbegriff des Patentanspruchs 1.

Eine derartige batteriebetriebene Einrichtung ist bereits aus der GB-PS 1,395,508 bekannt. Diese bekannte Einrichtung, die in Fig. 1 genauer dargestellt ist, enthält eine aus mehreren in Reihe geschalteten Zellen 1 bestehende Batterie 2, die über eine Brückenschaltung 3 gespeist wird, welche ihrerseits über Stecker 4 und 5 mit der Sekundärseite eines Netztransformators 6 verbunden ist. Über eine Schaltereinrichtung 7 ist ein Gleichstrommotor 8 mit der Batterie 2 verbunden, wobei mit Hilfe der Schaltereinrichtung 7 zunächst eine über einen Zwischenabgriff 7a der Batterie 2 erhaltene kleinere Batteriespannung und danach eine über einen Endabgriff 7b der Batterie 2 erhaltene volle Batteriespannung an den Gleichstrommotor 8 lieferbar sind, um dessen Drehzahl zu ändern.

Bei der Drehzahlumschaltung besteht allerdings die Gefahr, daß es zu einem Kurzschluß zwischen dem Zwischenabgriff und dem Endabgriff infolge eines gezogenen Lichtbogens kommt, insbesondere dann, wenn es sich um einen Gleichstrommotor mit hoher Leistung handelt. In diesem Fall würde also ein Leistungseinbruch auftreten, der insbesondere bei Werkzeugmaschinen nicht hinnehmbar ist.

Ein Leistungseinbruch ergibt sich außerdem aufgrund der Tatsache, daß die jeweiligen Stromkreise bei der Drehzahlumschaltung infolge der Schalterverstellung unterbrochen werden.

Aus der US-A-2,353,410 ist weiterhin eine batteriebetriebene Einrichtung bekannt, bei der einem Verbraucher eine variable Zellenzahl der Batterie zugeschaltet wird. Zu diesem Zweck sind ein erster Schalter zur Übertragung einer kleineren Batteriespannung und ein zweiter Schalter vorhanden, der beim Schließen die Lieferung der vollen Batteriespannung zur Last ermöglicht. Eine Diode liegt parallel zu einer Reihenschaltung aus einem Teil der Zellen und dem zweiten Schalter, während parallel zur Diode der erste Schalter angeordnet ist.

Der Erfindung liegt die Aufgabe zugrunde, die eingangs erwähnte batteriebetriebene Einrichtung so weiterzubilden, daß Leistungseinbrüche infolge von Kurzschlüssen oder Stromkreisunterbrechungen weitestgehend vermieden werden.

Die Lösung der gestellten Aufgabe ist im kennzeichnenden Teil des Patentanspruchs 1 angegeben. Vorteilhafte Ausgestaltungen der Erfindung sind den Unteransprüchen zu entnehmen.

Eine batteriebetriebene Einrichtung nach der Erfindung zeichnet sich dadurch aus, daß
- die Schaltereinrichtung eine zweipolige Schaltereinrichtung mit einem ersten Schalter zur Übertragung der kleineren Batteriespannung und einem zweiten Schalter ist, der beim Schließen die Lieferung der vollen Batteriespannung zum Gleichstrommotor bewirkt,
- der erste Schalter so ausgebildet ist, daß er nach Schließung im geschlossenen Zustand verbleibt, bis der zweite Schalter schließt, und
- Mittel vorhanden sind, durch die ein Kurzschluß zwischen dem Zwischenabgriff und dem Endabgriff der Batterie beim Schließen des zweiten Schalters verhindert wird.

Die batteriebetriebene Einrichtung nach der Erfindung kann z. B. in einen Betriebsteil unterteilt sein, der wenigstens den Gleichstrommotor und die Schaltereinrichtung enthält, und in einen Versorgungsteil, der wenigstens die Batterie enthält, wobei beide Teile elektrisch miteinander verbindbar sind. Der Betriebsteil kann z. B. als tragbare Bohrmaschine oder als ein anderes, elektrisch betriebenes Werkzeug ausgebildet sein.

Wird beispielsweise eine Bohrmaschine betrachtet, so sollen bei dieser zwei feste Drehzahlen eingestellt werden können, nämlich eine kleine für einen Anbohrbetrieb und eine große für einen Hauptbohrbetrieb nach Durchführung des Anbohrbetriebs. Um die genannten Drehzahlen einstellen zu können, wird eine zweipolige Schaltereinrichtung verwendet, die einen Drücker zum Schließen des ersten und des zweiten Schalters aufweist. Durch geringes Eindrücken des Drückers wird zunächst der erste Schalter geschlossen, so daß direkt über ihn die kleinere Batteriespannung vom Zwischenabgriff zum Gleichstrommotor geliefert wird. Bei weiterem Eindrükken des Drückers wird dann zu einem späteren Zeitpunkt der zweite Schalter geschlossen, der dann direkt oder indirekt für eine Lieferung der vollen Batteriespannung zum Gleichstrommotor sorgt, die vom Endabgriff der Batterie erhalten wird. Diese volle Batteriespannung kann ebenfalls über den ersten Schalter an den Gleichstrommotor gelegt werden oder aber auch direkt über den zweiten Schalter, je nach Schaltungsausführung. In beiden Fällen muß der erste Schalter nach seiner Schließung über den gesamten weiteren Schaltweg geschlossen bleiben, bis der zweite Schalter schließt, um keine Stromkreisunterbrechung zu bewirken, die zu einem Leistungseinbruch führen würde.

Um einen Kurzschluß zwischen dem Zwischenabgriff und dem Endabgriff der Batterie beim Schließen des zweiten Schalters zu verhindern, ist beispielsweise eine Diodeneinrichtung in einem Leitungszweig angeordnet, der vom Zwischenabgriff der Batterie zum ersten Schalter führt, der nach Schließung über den gesamten Schalterweg geschlossen bleibt. Ihrer Polung entsprechend läßt die Diodeneinrichtung einen Stromfluß beim Schließen des ersten Schalters durch den Gleichstrommotor zu, wobei die Diodeneinrichtung jedoch beim Schließen des zweiten Schalters zwischen dem Zwischenabgriff und dem Endabgriff der Batterie zu liegen kommt und infolgedessen durch die zwischen Zwischenabgriff und Endabgriff liegende Differenzspannung gesperrt wird. Ein Kurzschlußstrom der oben beschriebenen Art wird von dieser Diodeneinrichtung verhindert, auch wenn der zweite Schalter bei noch geschlossenem ersten Schalter geschlossen wird. Es läßt sich somit ein Umschaltbetrieb durchführen, bei dem weder ein Leistungseinbruch durch Kurzschluß noch durch Stromkreisunterbrechung auftritt.

Statt der Diodeneinrichtung kann auch eine andere Einrichtung zur Verhinderung des Kurzschlusses zwischen dem Zwischenabgriff und dem Endabgriff der Batterie beim Schließen des zweiten Schalters zum Einsatz kommen, beispielsweise ein relaisgesteuerter oder elektronischer Wechselschalter. Dieser Wechselschalter wird bei Schließung des zweiten Schalters umgeschaltet und liefert somit jeweils über den geschlossenen ersten Schalter einmal die kleinere Batteriespannung und einmal die volle Batteriespannung zum Gleichstrommotor.

Die Zeichnung stellt neben dem Stand der Technik Ausführungsbeispiele der Erfindung dar. Es zeigen:

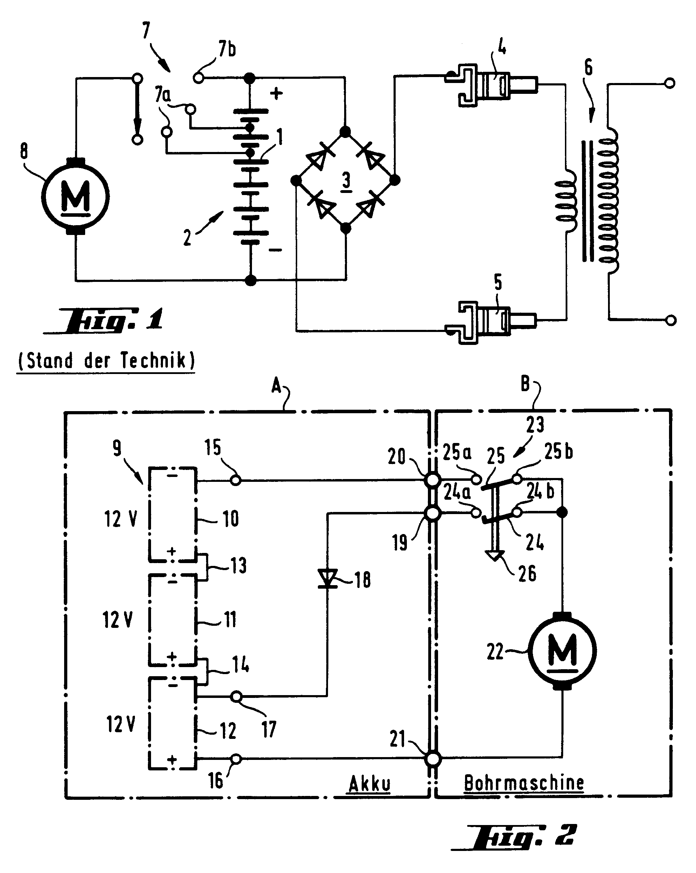

Fig. 1 die batteriebetriebene Einrichtung nach dem Stand der Technik,
Fig. 2 eine batteriebetriebene Einrichtung nach der Erfindung mit einer Diodeneinrichtung zur Kurzschlußverhinderung,
Fig. 3 die Einrichtung nach Fig. 2, bei der jedoch der erste und der zweite Schalter der Schaltereinrichtung in Reihe geschaltet sind,
Fig. 4 eine batteriebetriebene Einrichtung nach der Erfindung mit einer Diodeneinrichtung zur Kurzschlußverhinderung und einer Schaltereinrichtung, bei der sowohl die kleinere Batteriespannung als auch die volle Batteriespannung über deren ersten Schalter übertragen wird, und
Fig. 5 eine batteriebetriebene Einrichtung nach der Erfindung mit einem relaisgesteuerten Wechselschalter zur Kurzschlußverhinderung zwischen Zwischenabgriff und Endabgriff der Batterie sowie mit Motor-Freilaufdiode und Kurzschlußwiderstand.

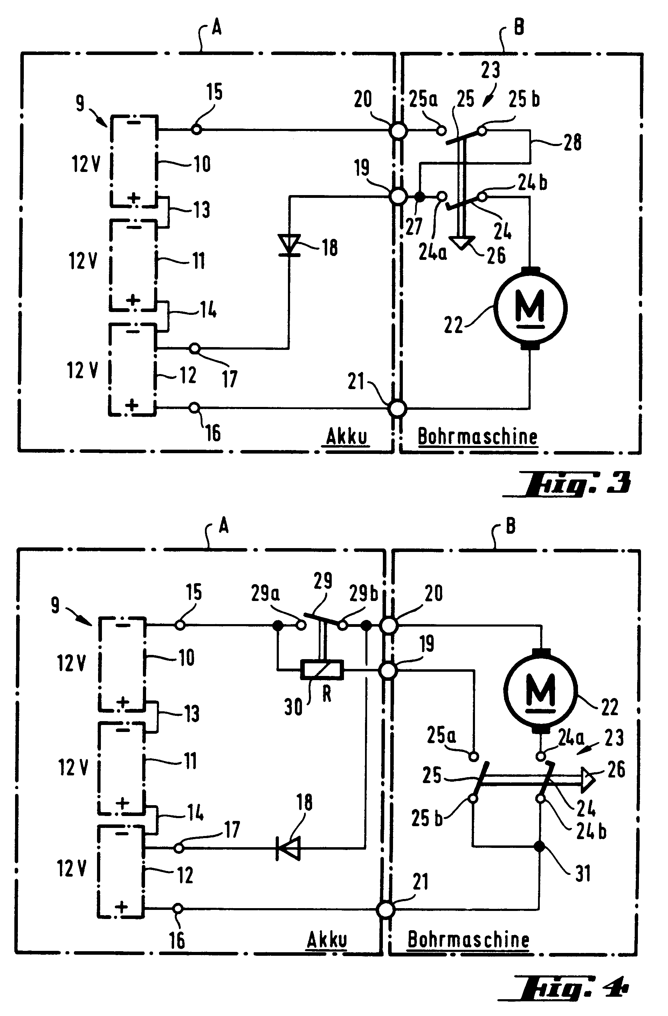

Ausführungsbeispiele der Erfindung werden nachfolgend unter Bezugnahme auf die Fig. 2 bis 5 näher beschrieben, in denen gleiche Elemente mit den gleichen Bezugszeichen versehen sind.

Die Fig. 2 zeigt eine batteriebetriebene Einrichtung nach einem ersten Ausführungsbeispiel der Erfindung. Diese batteriebetriebene Einrichtung besteht aus einem Betriebsteil A und einem Betriebsteil B. Beide Betriebsteile sind elektrisch miteinander verbunden, beispielsweise über eine flexible oder eine feste Leitungsverbindung. Sie können auch zusammengesteckt sein, so daß beide Betriebsteile A und B als eine Einheit handhabbar sind.

Der Betriebsteil A ist im vorliegenden Fall als Akkumulator ausgebildet, während der Betriebsteil B z. B. eine Handbohrmaschine ist. Im Betriebsteil A befindet sich eine Batterie 9, die drei in Reihe geschaltete Zellengruppen 10, 11 und 12 aufweist, die jeweils eine Spannung von z. B. 12 V liefern. Die Zellengruppen 10 und 11 bzw. 11 und 12 sind jeweils über eine Leitungsverbindung 13 bzw. 14 untereinander verbunden, so daß sie insgesamt eine Spannung von 36 V liefern, die zwischen zwei Endabgriffen 15 und 16 liegt. Der negative Pol erscheint dabei am Endabgriff 15, während der positive Pol am Endabgriff 16 erscheint. Die Zellengruppe 12 besitzt ferner einen Zwischenabgriff 17, um eine kleinere Betriebsspannung zur Verfügung zu stellen, die beispielsweise bei 9,6 V liegt.

Selbstverständlich können auch mehr als drei Zellengruppen elektrisch zueinander in Reihe geschaltet sein, um eine Batterie zu erhalten, die eine größere Batteriespannung liefert. Darüber hinaus kann auch der Zwischenabgriff an anderer Stelle vorhanden sein, um eine gewünschte kleinere Batteriespannung zu erzeugen. Die einzelnen Zellengruppen weisen Zellen auf, so daß sich der Zwischenabgriff zwischen jeweils zwei Zellen positionieren läßt.

Mit dem Zwischenabgriff 17 in Fig. 2 ist die Kathode einer Diode 18 verbunden, die in vorliegendem Fall die Diodeneinrichtung bildet. Die Anode der Diode 18 ist mit einem Verbindungsstecker 19 verbunden. Weitere Verbindungsstecker 20 bzw. 21 sind jeweils mit den Endabgriffen 15 bzw. 16 verbunden. Der Betriebsteil B enthält einen Gleichstrommotor 22 und eine zweipolige Schaltereinrichtung 23 mit einem ersten Schalter 24 und einem zweiten Schalter 25. Beide Schalter 24 und 25 sind als sogenannte Schließer ausgebildet. Die Schaltereinrichtung 23 ist in Form eines Druckschalters ausgebildet und weist einen mechanisch betätigbaren Drücker 26 auf. Im nichtbetätigten Zustand sind die Schalter 24 und 25 geöffnet. Wird der Drücker 26 betätigt, so schließt zunächst der Schalter 24 und bleibt über den weiteren Schalterweg geschlossen, bis auch der zweite Schalter 25 schließt.

Mit einem Kontaktanschluß 25a des zweiten Schalters 25 ist der Verbindungsstecker 20 verbunden, während der Verbindungsstecker 19 mit einem Kontaktanschluß 24a des ersten Schalters 24 verbunden ist. Die anderen Kontaktanschlüsse 24b und 25b von erstem und zweitem Schalter 24, 25 sind untereinander und mit einem Anschluß des Gleichstrommotors 22 verbunden, dessen anderer Anschluß mit dem Verbindungsstecker 21 verbunden ist.

Nachfolgend wird der Betrieb der in Fig. 2 gezeigten Einrichtung näher beschrieben. Nach Verbindung der Betriebsteile A und B über die Verbindungsstecker 19, 20, 21 wird zur Durchführung eines Anbohrbetriebs, wenn es sich beim Betriebsteil B um z. B. eine Handbohrmaschine handelt, zunächst der Drücker 26, der Teil der Bohrmaschine ist, in diese hineingedrückt, so daß als erstes der erste Schalter 24 schließt. In diesem Fall liegt am Gleichstrommotor 22 eine kleinere Batteriespannung, die sich durch die Spannungsdifferenz zwischen dem Zwischenabgriff 17 und dem positiv gepolten Endabgriff 16 ergibt. Es fließt somit ein Strom vom positiv gepolten Endabgriff 16 über den Verbindungsstecker 21, den Gleichstrommotor 22, den geschlossenen Schalter 24, die Diode 18 und die Zelle 12, wobei sich der Gleichstrommotor 22 relativ langsam dreht.

Wird dann der Drücker 26 z. B. mit dem Zeigefinger noch weiter in die Bohrmaschine hineingedrückt, so schließt anschließend auch der zweite Schalter 25, ohne daß jedoch der erste Schalter 24 öffnet. Der Gleichstrommotor 22 erhält jetzt die volle Batteriespannung, die zwischen den Endabgriffen 15 und 16 liegt, so daß er sich mit höherer Geschwindigkeit dreht. Ein Kurzschluß zwischen dem Endabgriff 15 und dem Zwischenabgriff 17 über den ersten und den zweiten Schalter 24, 25 tritt jedoch nicht auf, da die Diode 18 so gepolt ist, daß sie aufgrund der Spannungsdifferenz zwischen dem Endabgriff 15 und dem Zwischenabgriff 17 in den Sperrzustand überführt wird.

Es tritt daher während des Umschaltens des Gleichstrommotors 22 von der kleineren Drehzahl auf die höhere Drehzahl kein Leistungseinbruch auf, und zwar weder durch einen Kurzschluß zwischen dem Endabgriff 15 und dem Zwischenabgriff 17 noch infolge einer Stromkreisunterbrechung beim Betätigen der Schaltereinrichtung 23.

Für den Fall, daß die Polung der Batterie 9 entgegengesetzt sein sollte, also der Pluspol am Endabgriff 15 und der Minuspol am Endabgriff 16 liegen, muß die Diode 18, die beispielsweise eine Halbleiterdiode sein kann, entsprechend umgepolt werden.

Die Ausführungsform nach Fig. 3 entspricht praktisch derjenigen nach Fig. 2, jedoch liegen hier die beiden Schalter 24 und 25 elektrisch in Reihe zueinander. Der Kontaktanschluß 25b des zweiten Schalters 25 ist also mit dem Kontaktanschluß 24a des ersten Schalters 24 verbunden, während nur der andere Kontaktanschluß 24b des ersten Schalters 24 mit dem Gleichstrommotor 22 verbunden ist. Sind beide Schalter 24 und 25 geschlossen, so wird also die volle Batteriespannung über beide Schalter 24 und 25 zum Gleichstrommotor 22 geliefert.

Die Ausführungsform nach Fig. 3 läßt sich auch so abwandeln, daß der Gleichstrommotor 22 statt zwischen dem Kontaktanschluß 24b des ersten Schalters 24 und dem Verbindungsstecker 21 im Leitungsbereich unmittelbar vor dem Kontaktanschluß 24a des ersten Schalters 24 zu liegen kommt. Der Gleichstrommotor 22 liegt dann zwischen der Diode 18 und dem Kontaktanschluß 24a des ersten Schalters 24 und im gemeinsamen Leitungsbereich der beiden Stromkreise, also zwischen dem Kontaktanschluß 24a und einem Knotenpunkt 27, der über eine Leitung 28 mit dem Kontaktanschluß 25b des zweiten Schalters 25 verbunden ist.

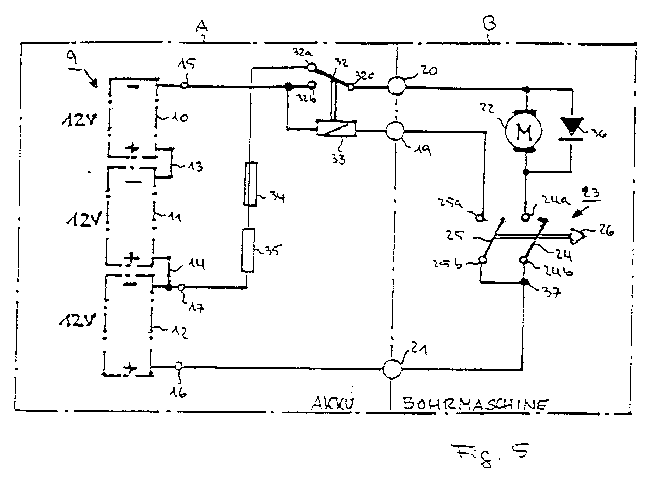

Beim Ausführungsbeispiel nach Fig. 4 werden die kleinere Batteriespannung und die volle Batteriespannung ausschließlich über den ersten Schalter 24 zum Gleichstrommotor 22 geliefert. Abweichend von den zuvor beschriebenen Ausführungsbeispielen befindet sich hier ein Relaisschalter 29 im Leitungsbereich zwischen dem Endabgriff 15 und dem Verbindungsstecker 20. Der Relaisschalter 29 kann mit Hilfe eines Relais 30 geschlossen werden, wenn dieses von einem Strom durchflossen wird. Das Relais 30 bzw. R steht dabei mechanisch mit dem Relaisschalter 29 in Verbindung. Genauer gesagt ist der Endabgriff 15 der Batterie 9 mit einem Kontaktanschluß 29a des Relaisschalters 29 verbunden sowie ferner über das Relais 30 und den Verbindungsstecker 19 mit einem Kontaktanschluß 25a des zweiten Schalters 25. Der andere Kontaktanschluß 29b des Relaisschalters 29 ist innerhalb des Betriebsteils A mit der Anode der Diode 18 und ferner über den Verbindungsstecker 20 mit einem Anschluß des Gleichstrommotors 22 verbunden, dessen anderer Anschluß mit dem Kontaktanschluß 24a des ersten Schalters 24 verbunden ist. Die Kontaktanschlüsse 24b und 25b von erstem und zweitem Schalter 24, 25 sind untereinander und über den Verbindungsstecker 21 mit dem Batterie-Endabgriff 16 verbunden, der positive Polarität aufweist.

Wird zunächst durch Betätigen des Drückers 26 der erste Schalter 24 geschlossen, so wird der Gleichstrommotor 22 mit der kleineren Batteriespannung versorgt, die sich infolge des Abgriffs über die Klemmen 16 und 17 ergibt. In diesem Fall fließt also ein Batteriestrom vom positiv gepolten Batterie-Endabgriff 16 über den Verbindungsstecker 21 und den ersten Schalter 24 zum Motor 22 und von diesem über den Verbindungsstecker 20 und die Diode 18 zurück zum Zwischenabgriff 17. Dabei dreht sich der Gleichstrommotor 22 mit geringer Drehzahl.

Wird anschließend der Drücker 26 weiter hineingedrückt, so wird schließlich der zweite Schalter 25 geschlossen, während der erste Schalter 24 im geschlossenen Zustand verbleibt. Es tritt somit zunächst keine Stromkreisunterbrechung auf. Infolge der Schließung des zweiten Schalters 25 zieht das Relais 30 an, so daß der Relaisschalter 29 schließt. Wie bereits oben ausgeführt, wird aufgrund der gewählten Polung der Diode 18 kein Kurzschluß zwischen dem Endabgriff 15 und dem Zwischenabgriff 17 erzeugt, da die Diode 18 aufgrund der Differenzspannung zwischen dem Endabgriff 15 und dem Zwischenabgriff 17 in den Sperrzustand überführt wird. Der Gleichstrommotor 22 erhält jetzt die volle Batteriespannung über den Relaisschalter 29 und den ersten Schalter 24 und dreht sich daher mit hoher Drehzahl.

Beim Loslassen des Drückers 26 wird, wie in den zuvor beschriebenen Fällen auch, zunächst der zweite Schalter 25 geöffnet, so daß der Gleichstrommotor 22 zunächst wieder die kleinere Batteriespannung empfängt und sich mit geringerer Drehzahl dreht. Er wird erst abgeschaltet, nachdem sich auch der erste Schalter 24 geöffnet hat. Sowohl der Anlauf als auch das Abschalten des Gleichstrommotors 22 erfolgen also zweistufig.

Der Schalter 29 kann auch als elektronischer Schalter ausgebildet sein, z. B. als Transistorschalter oder Thyristor. Die Relaisspule 30 ist dann durch eine Ansteuerstufe zur Ansteuerung des Transistorschalters oder des Thyristors bei Schließen des zweiten Schalters 25 realisiert.

Beim Ausführungsbeispiel nach Fig. 4 ist es auch möglich, den Gleichstrommotor 22 im Leitungszweig zwischen dem Verbindungsstecker 21 und einem Knotenpunkt 31 anzuordnen, mit dem die Kontaktanschlüsse 24b und 25b von erstem und zweitem Schalter 24, 25 verbunden sind.

Ein weiteres Ausführungsbeispiel der batteriebetriebenen Einrichtung nach der Erfindung ist in Fig. 5 dargestellt. Gleiche Elemente wie in den Fig. 2 bis 4 sind dabei mit den gleichen Bezugszeichen versehen.

Im Leitungsbereich zwischen dem Endabgriff 15 und dem Verbindungsstecker 20 befindet sich hier ein Wechselschalter 32, der von einem Relais 33 gesteuert wird. Genauer gesagt ist hier ein gemeinsamer Kontaktanschluß 32c des Wechselschalters 32 über den Verbindungsstecker 20 mit einem Anschluß des Gleichstrommotors 22 verbunden, dessen anderer Anschluß mit dem ersten Kontaktanschluß 24a des ersten Schalters 24 verbunden ist. Ein Wechsel-Kontaktanschluß 32a des Schalters 32 ist über eine Sicherung 34 und einen Widerstand 35 mit dem Zwischenabgriff 17 verbunden, während ein anderer Wechsel-Kontaktanschluß 32b des Wechselschalters 32 mit dem Endabgriff 15 und über das Relais 33 und den Verbindungsstecker 19 mit einem Kontaktanschluß 25a des zweiten Schalters 25 verbunden ist. Die weiteren Kontaktanschlüsse 24b und 25b sind untereinander und über den Verbindungsstecker 21 mit dem Batterie-Endabgriff 16 verbunden, der positive Polarität aufweist. Ferner liegt parallel zum Gleichstrommotor 22 eine Freilaufdiode 36.

Der Betrieb dieser Einrichtung nach Fig. 5 wird nachfolgend näher beschrieben.

Wird der Drücker 26 nur leicht betätigt, so wird zunächst nur der erste Schalter 24 geschlossen. Der Gleichstrommotor erhält dann eine kleinere Betriebsspannung, die der Batteriespannung zwischen dem Zwischenabgriff 17 und dem Batterie-Endabgriff 16 entspricht. Es fließt im vorliegenden Fall also ausgehend vom Batterie-Endabgriff 16 ein Strom über den Verbindungsstecker 21, den ersten Schalter 24, den Gleichstrommotor 22 sowie über die Kontaktanschlüsse 32c und 32a des Wechselschalters 32 und ferner über die Sicherung 34 und den Widerstand 35 zurück zum Zwischenabgriff 17. Der Gleichstrommotor 22 dreht sich dann mit einer geringen Drehzahl.

Wird die Schaltereinrichtung 23 vollständig durchgedrückt, so schließt zuletzt auch der zweite Schalter 25, während der erste Schalter 24 im geschlossenen Zustand verbleibt. Aufgrund des geschlossenen zweiten Schalters 25 gelangt an die Relaisspule 33 die volle Batteriespannung zwischen den Endabgriffen 15 und 16, so daß die Relaisspule 33 anzieht. Dabei wird der Relaisschalter 32 umgeschaltet, so daß jetzt seine Kontaktanschlüsse 32b und 32c überbrückt sind. Der Gleichstrommotor 22 erhält jetzt ebenfalls die volle Batteriespannung, die zwischen den Endabgriffen 15 und 16 liegt, so daß ein Strom, ausgehend von dem Endabgriff 16, über den Verbindungsstecker 21, den ersten Schalter 24, den Gleichstrommotor 22 und den Wechselschalter 32 zum Endabgriff 15 fließt. Der Gleichstrommotor 22 dreht sich jetzt mit höherer Drehzahl. Während der kurzzeitigen Stromunterbrechung beim Schalten von 32a auf 32b übernimmt die Freilaufdiode 36 den Stromfluß.

Beim Loslassen der Schaltereinrichtung 23 läuft der beschriebene Vorgang in umgekehrter Reihenfolge ab, wobei zunächst der zweite Schalter 25 öffnet und das Relais 33 abfällt. Dadurch werden wiederum die Kontaktanschlüsse 32a und 32c durch den Wechselschalter 32 überbrückt, so daß sich der Gleichstrommotor zunächst mit der kleinere Drehzahl dreht, bevor er durch Öffnen des ersten Schalters 24 vollständig ausgeschaltet wird.

Der Wechselschalter 32 ist so aufgebaut, daß nie eine Kontaktüberlappung zwischen den Kontaktanschlüssen 32a und 32b auftritt. Die Freilaufdiode 36 ist so gepolt, daß sie für einen ununterbrochenen Stromfluß im Gleichstrommotor beim Weiterschalten vom Kontaktanschluß 32a auf den Kontaktanschluß 32b sorgt und gleichzeitig auch eine Lichtbogenlöschung zwischen diesen Kontaktanschlüssen unterstützt. Genauer gesagt ist die Kathode der Diode 36 mit dem Kontaktanschluß 24a des ersten Schalters 24 und die Anode der Diode 36 mit dem Verbindungsstecker 20 verbunden. Der Schutzwiderstand 35 begrenzt einen Strom für den Fall, daß doch noch ein Lichtbogen zwischen den Kontaktanschlüssen 32a und 32b stehengeblieben ist. Sollte dieser Strom einen zu großen Wert annehmen, so sorgt die Sicherung 34 für eine Unterbrechung des Stromkreises.

Auch der Wechselschalter 32 kann als elektronischer Schalter realisiert sein, beispielsweise durch Transistoren oder Thyristoren, die dann anstelle der Relaisspule von einer Ansteuerstufe angesteuert werden, wenn der zweite Schalter 25 geschlossen wird.

Beim Ausführungsbeispiel nach Fig. 5 kann der Gleichstrommotor motor 22 mit parallel liegender Freilaufdiode 36 auch zwischen dem Verbindungsstecker 21 und einem Knotenpunkt 37 liegen, mit dem die Rontaktanschlüsse 25b und 24b der Schalter 25 und 24 verbunden sind.

Mit der batteriebetriebenen Einrichtung nach der Erfindung läßt sich neben einer geeigneten Drehzahlsteuerung ohne Leistungseinbruch auch der Einschaltstrom in der Anlaufphase herabsetzen, wodurch Schalter, Schaltrelais bzw. Kontaktanschlüsse und Batteriezellen geschont werden. Ferner reduziert sich die Gefahr einer irreversiblen Feldschädigung durch Einschalten der Einrichtung bei tiefen Temperaturen.

## Patentansprüche

1. Batteriebetriebene Einrichtung mit
- einem Gleichstrommotor (22),
- einer aus mehreren in Reihe geschalteten Zellen (10, 11, 12) bestehenden Batterie (9) sowie
- einer Schaltereinrichtung (23), über die zunächst eine über einen Zwischenabgriff (17) der Batterie (9) erhaltene kleinere Batteriespannung und danach eine über einen Endabgriff (15) der Batterie (9) erhaltene volle Batteriespannung an den Gleichstrommotor (22) lieferbar sind, um dessen Drehzahl zu ändern,
**dadurch gekennzeichnet,** daß
- die Schaltereinrichtung eine zweipolige Schaltereinrichtung (23) mit einem ersten Schalter (24) zur Übertragung der kleineren Batteriespannung und einem zweiten Schalter (25) ist, der beim Schließen die Lieferung der vollen Batteriespannung zum Gleichstrommotor (22) bewirkt,
- der erste Schalter (24) so ausgebildet ist, daß er nach Schließung im geschlossenen Zustand verbleibt, bis der zweite Schalter (25) schließt, und
- Mittel (18; 32, 33; ...) vorhanden sind,durch die ein Kurzschluß zwischen dem Zwischenabgriff (17) und dem Endabgriff (15) der Batterie (9) beim Schließen des zweiten Schalters (25) verhindert wird.

2. Batteriebetriebene Einrichtung nach Anspruch 1, **dadurch gekennzeichnet**, daß die Mittel durch eine Diodeneinrichtung (18) gebildet sind, die in einem Leitungszweig zwischen dem Zwischenabgriff (17) und einem Kontaktanschluß (24a) des ersten Schalters (24) liegt.

3. Batteriebetriebene Einrichtung nach Anspruch 2, **dadurch gekennzeichnet**, daß zwischen der Diodeneinrichtung (18) und dem Kontaktanschluß (24a) des ersten Schalters (24) der Gleichstrommotor (22) angeordnet ist.

4. Batteriebetriebene Einrichtung nach Anspruch 2, **dadurch gekennzeichnet**, daß ein nicht mit der Diodeneinrichtung (18) verbundener Kontaktanschluß (24b) des ersten Schalters (24) mit einem Kontaktanschluß 25b) des zweiten Schalters (25) sowie mit dem Gleichstrommotor (22) und ferner der noch freie Kontaktanschluß (25a) des zweiten Schalters (25) mit dem Endabgriff (15) der Batterie (9) verbunden sind.

5. Batteriebetriebene Einrichtung nach Anspruch 2, **dadurch gekennzeichnet**, daß ein nicht mit der Diodeneinrichtung (18) verbundener Kontaktanschluß (24b) des ersten Schalters (24) nur mit dem Gleichstrommotor (22) und der mit der Diodeneinrichtung (18) verbundene Kontaktanschluß (24a) des ersten Schalters (24) ferner mit einem Kontaktanschluß (25b) des zweiten Schalters (25) verbunden sind, dessen anderer Kontaktanschluß (25a) mit dem Endabgriff (15) der Batterie (9) verbunden ist.

6. Batteriebetriebene Einrichtung nach Anspruch 3, **dadurch gekennzeichnet**, daß eine zwischen der Diodeneinrichtung (18) und dem Gleichstrommotor (22) liegende Leitung mit einem Kontaktanschluß (25b) des zweiten Schalters (25), der andere Kontaktanschluß (25a) des zweiten Schalters (25) mit dem Endabgriff (15) der Batterie (9)und der noch freie Kontaktanschluß (24b) des ersten Schalters (24) mit einem dem Endabgriff (15) der Batterie (9) gegenüberliegenden Batterie-Endabgriff (16) verbunden sind.

7. Batteriebetriebene Einrichtung nach Anspruch 2, **dadurch gekennzeichnet**, daß eine Leitung zwischen der Diodeneinrichtung (18) und dem Kontaktanschluß (24a) des ersten Schalters (24) mit einem Kontaktanschluß (29b) eines Schalters (29) verbunden ist, dessen anderer Kontaktanschluß (29a) mit dem Endabgriff (15) der Batterie (9) sowie über eine zum Schließen des Schalters (29) dienende Ansteuerstufe (30) mit einem Kontaktanschluß (25a) des zweiten Schalters (25) verbunden ist, dessen anderer Kontaktanschluß (25b) mit dem noch freien Kontaktanschluß (24b) des ersten Schalters (24) sowie über den Gleichstrommotor (22) mit einem dem Endabgriff (15) der Batterie (9) gegenüberliegenden Batterie-Endabgriff (16) verbunden ist.

8. Batteriebetriebene Einrichtung nach Anspruch 3, **dadurch gekennzeichnet**, daß eine Leitung zwischen Diodeneinrichtung (18) und Gleichstrommotor (22) mit einem Kontaktanschluß (29b) eines Schalters (29) verbunden ist, dessen anderer Kontaktanschluß (29a) mit dem Endabgriff (15) der Batterie (9) sowie über eine zum Schließen des Schalters (29) dienende Ansteuerstufe (30) mit einem Kontaktanschluß (25a) des zweiten Schalters (25) verbunden ist, dessen anderer Kontaktanschluß (25b) mit dem noch freien Kontaktanschluß (24b) des ersten Schalters (24) sowie mit einem dem Endabgriff (15) der Batterie (9) gegenüberliegenden Batterie-Endabgriff (16) verbunden ist.

9. Batteriebetriebene Einrichtung nach Anspruch 1, **dadurch gekennzeichnet**, daß die Mittel durch einen Wechselschalter (32) gebildet sind, dessen gemeinsamer Kontaktanschluß (32c) über den Gleichstrommotor (22) mit einem Kontaktanschluß (24a) des ersten Schalters (24), dessen einer Wechsel-Kontaktanschluß (32a) mit dem Zwischenabgriff (17) der Batterie (9) und dessen anderer Wechsel-Kontaktanschluß (32b) mit dem Endabgriff (15) der Batterie (9) sowie über eine zum Umschalten des Wechselschalters (32) vom einen auf den anderen Wechsel-Kontaktanschluß dienende Ansteuerstufe (33) mit dem Kontaktanschluß (25a) des zweiten Schalters (25) verbunden sind, dessen anderer Kontaktanschluß (25b) mit dem noch freien Kontaktanschluß (24b) des ersten Schalters (24) sowie mit einem dem Endabgriff (15) der Batterie (9) gegenüberliegenden Batterie-Endabgriff (16) verbunden ist, und daß parallel zum Gleichstrommotor (22) eine Freilaufdiode (36) liegt.

10. Batteriebetriebene Einrichtung nach Anspruch 9, **dadurch gekennzeichnet**, daß der Gleichstrommotor (22) statt im Leitungszweig zwischen dem gemeinsamen Kontaktanschluß (32c) des Wechselschalters (32) und dem Kontaktanschluß (24a) des ersten Schalters (24) im Leitungszweig zwischen dem Batterie-Endabgriff (16) und den untereinander verbundenen Kontaktanschlüssen (24b, 25b) von erstem und zweitem Schalter (24, 25) liegt.

11. Batteriebetriebene Einrichtung nach Anspruch 9 oder 10, **dadurch gekennzeichnet,** daß zwischen dem Zwischenabgriff (17) und dem einen Wechsel-Kontaktanschluß (32a) ein Widerstand (35) angeordnet ist.

12. Batteriebetriebene Einrichtung nach Anspruch 11, **dadurch gekennzeichnet**, daß eine Sicherung (34) in Reihe zum Widerstand (35) liegt.

13. Batteriebetriebene Einrichtung nach einem der Ansprüche 2 bis 8, **dadurch gekennzeichnet**, daß die Diodeneinrichtung eine Ealbleiterdiode ist. ist.

14. Batteriebetriebene Einrichtung nach einem der Ansprüche 1 bis 13, **dadurch gekennzeichnet**, daß sie in einen Betriebsteil (A), der wenigstens den Gleichstrommotor (22) und die Schaltereinrichtung (23) enthält, und in einen Versorgungsteil (B) unterteilt ist, der wenigstens die Batterie enthält, und daß beide Teile elektrisch miteinander verbindbar sind.

15. Batteriebetriebene Einrichtung nach Anspruch 14, **dadurch gekennzeichnet**, daß der Betriebsteil (A) als Bohrmaschine ausgebildet ist.

16. Batteriebetriebene Einrichtung nach einem der An sprüche 7 bis 9, **dadurch gekennzeichnet**, daß der Schalter (29) bzw. der Wechselschalter (32) relaisgesteuerte Schalter sind und die Ansteuerstufe (30, 33) eine Relaisspule ist.

17. Batteriebetriebene Einrichtung nach einem der An sprüche 7 bis 9, **dadurch gekennzeichnet**, daß der Schalter (29) bzw. der Wechselschalter (32) durch elektronische Schaltelemente gebildet sind und die Ansteuerstufe zur Ansteuerung der elektronischen Schaltelemente ausgebildet ist.

18. Batteriebetriebene Einrichtung nach Anspruch 17, **dadurch gekennzeichnet**, daß die elektronischen Schaltelemente Transistoren oder Thyristoren sind.

## Claims

1. Battery driven device having
- a d.c. motor (22),
- a battery (9) consisting of a plurality of series connected cells (10, 11, 12), and also
- a switch device (23) through which there can be supplied to the d.c. motor (22), first a lower battery voltage obtained via an intermediate tapping (17) of the battery (9) and then a full battery voltage obtained via an end tapping (15) of the battery (9), to vary its rotational speed,
characterised in that
- the switch device is a two pole switch device (23) with a first switch (24) for transmission of the lower battery voltage and a second switch (25) which on closing effects the supply of the full battery voltage to the d.c. motor (22),
- the first switch (24) is so constructed that after being closed it remains in the closed state until the second switch (25) closes, and
- means (18; 32, 33; ...) are present which prevent short circuiting between the intermediate tapping (17) and the end tapping (15) of the battery (9) upon closing of the second switch (25).

2. Battery driven device according to claim 1, characterised in that the said means are formed by a diode device (18) disposed in a branch conductor between the intermediate tapping (17) and a contact terminal (24a) of the first switch (24).

3. Battery driven device according to claim 2, characterised in that the d.c. motor (22) is arranged between the diode device (18) and the contact terminal (24a) of the first switch (24).

4. Battery driven device according to claim 2, characterised in that a contact terminal (24b) of the first switch (24) which is not connected to the diode device (18) is connected both to a contact terminal (25b) of the second switch (25) and to the d.c. motor (22), and furthermore that the still free contact terminal (25a) of the second switch (25) is connected to the end tapping (15) of the battery (9).

5. Battery driven device according to claim 2, characterised in that a contact terminal (24b) of the first switch (24) which is not connected to the diode device (18) is connected only to the d.c. motor (22), and the contact terminal (24a) of the first switch (24) connected to the diode device (18) is also connected to a contact terminal (25b) of the second switch (25), whose other contact terminal (25a) is connected to the end tapping (15) of the battery (9).

6. Battery driven device according to claim 3, characterised in that a conductor disposed between the diode device (18) and the d.c. motor (22) is connected to a contact terminal (25b) of the second switch (25), the other contact terminal (25a) of the second switch (25) is connected to the end tapping (15) of the battery (9), and the still free contact terminal (24b) of the first switch (24) is connected to a battery end tapping (16) opposite to the end tapping (15) of the battery (9).

7. Battery driven device according to claim 2, characterised in that a conductor between the diode device (18) and the contact terminal (24a) of the first switch (24) is connected to a contact terminal (29b) of a switch (29) whose other contact terminal (29a) is connected both to the end tapping (15) of the battery (9) and to a contact terminal (25a) of the second switch (25) via a control stage (30) serving to close the switch (29), the other contact terminal (25b) of the second switch (25) being connected both to the still free contact terminal (24b) of the first switch (24) and via the d.c. motor (22) to a battery end tapping (16) opposite to the end tapping (15) of the battery (9).

8. Battery driven device according to claim 3, characterised in that a conductor between the diode device (18) and the d.c. motor (22) is connected to a contact terminal (29b) of a switch (29) whose other contact terminal (29a) is connected both to the end tapping (15) of the battery (9) and to a contact terminal (25a) of a second switch (25) via a control stage (30) serving to close the switch (29), the other contact terminal (25b) of the second switch (25) being connected both to the still free contact terminal (24b) of the first switch (24) and to a battery end tapping (16) opposite to the end tapping (15) of the battery (9).

9. Battery driven device according to claim 1, characterised in that the said means are formed by a selector switch (32) whose common contact terminal (32c) is connected via the d.c. motor (22) to a contact terminal (24a) of the first switch (24), and whose first selector contact terminal (32a) is connected to the intermediate tapping (17) of the battery (9), and whose other selector contact terminal (32b) is connected both to the end tapping (15) of the battery (9) and to the contact terminal (25a) of the second switch (25) via a control stage (33) serving to switch the selector switch (32) from one selector contact terminal to the other, the other contact terminal (25b) of the second switch (25) being connected both to the still free contact terminal (24b) of the first switch (24) and to a battery end tapping (16) opposite to the end tapping (15) of the battery (9), and that a recovery diode (36) is disposed in parallel to the d.c. motor (22).

10. Battery driven device according to claim 9, characterised in that the d.c. motor (22), instead of being disposed in the branch conductor between the common contact terminal (32c) of the selector switch (32) and the contact terminal (24a) of the first switch (24), is disposed in the branch conductor between the battery end tapping (16) and the interconnected contact terminals (24b, 25b) of the first and second switches (24, 25).

11. Battery driven device according to claim 9 or 10, characterised in that a resistor (35) is arranged between the intermediate tapping (17) and the first selector contact terminal (32a).

12. Battery driven device according to claim 11, characterised in that a fuse (34) is disposed in series with the resistor (35).

13. Battery driven device according to one of claims 2 to 8, characterised in that the diode device is a semi conductor diode.

14. Battery driven device according to one of claims 1 to 13, characterised in that it is divided into an operating part (A) which includes at least the d.c. motor (22) and the switch device (23), and a power supply part (B) which includes at least the battery, and that both parts can be interconnected electrically.

15. Battery driven device according to claim 14, characterised in that the operating part (A) is constructed as a power drill.

16. Battery driven device according to one of claims 7 to 9, characterised in that the switch (29) or the selector switch (32) are relay controlled switches and the control stage (30, 33) is a relay coil.

17. Battery driven device according to one of claims 7 to 9, characterised in that the switch (29) or the selector switch (32) are formed by electronic switching elements and the control stage is constructed to control the electronic switching elements.

18. Battery driven device according to claim 17, characterised in that the electronic switching elements are transistors or thyristors.

## Revendications

1. Dispositif fonctionnant sur batterie, comprenant
- un moteur à courant continu (22);
- une batterie (9) composée de plusieurs éléments (10, 11, 12) montés en série, ainsi
- qu'un dispositif commutateur (23) par l'intermédiaire duquel le moteur à courant continu (22) peut être alimenté tout d'abord avec une tension de batterie assez faible prélevée sur une prise intermédiaire (17) de la batterie (9), puis avec la pleine tension de batterie obtenue à une prise d'extrémité (15) de la batterie (9), pour en modifier la vitesse de rotation,
**caractérisé en ce** que
- le dispositif commutateur est un commutateur bipolaire (23) avec un premier commutateur (24) pour la transmission de la tension de batterie plus faible, et avec un second commutateur (25) dont la fermeture provoque l'alimentation du moteur à courant continu (22) avec la pleine tension de batterie,
- le premier commutateur (24) est réalisé de telle façon que, après la fermeture, il reste à l'état fermé jusqu'à ce que le second commutateur (25) soit fermé, et qu'il comprend
- des moyens (18; 32, 33; ...) qui, lors de la fermeture du second commutateur (25), empêchent un court-circuit entre la prise intermédiaire (17) et la prise d'extrémité (15) de la batterie (9).

2. Dispositif fonctionnant sur batterie selon la revendication 1, caractérisé en ce que les moyens sont constitués par un dispositif à diode (18) intercalé dans une branche du circuit, entre la prise intermédiaire (17) et un contact (24a) du premier commutateur (24).

3. Dispositif fonctionnant sur batterie selon la revendication 2, caractérisé en ce que le moteur à courant continu (22) est monté entre le dispositif à diode (18) et le contact (24a) du premier commutateur (24).

4. Dispositif fonctionnant sur batterie selon la revendication 2, caractérisé en ce qu'un contact (24b) du premier commutateur (24), non relié au dispositif à diode (18), est relié à un contact (25b) du second commutateur (25) ainsi qu'au moteur à courant continu (22), et que le contact (25a) encore libre du second commutateur (25) est relié à la prise d'extrémité (15) de la batterie (9).

5. Dispositif fonctionnant sur batterie selon la revendication 2, caractérisé en ce qu'un contact (24b) du premier commutateur (24), non relié au dispositif à diode (18), n'est relié qu'au moteur à courant continu (22) et que, en outre, le contact (24a) du premier commutateur (24) relié au dispositif à diode (18) est relié à un contact (25b) du second commutateur (25) dont l'autre contact (25a) est relié à la prise d'extrémité (15) de la batterie (9).

6. Dispositif fonctionnant sur batterie selon la revendication 3, caractérisé en ce qu'une ligne située entre le dispositif à diode (18) et le moteur à courant continu (22) est reliée à un contact (25b) du second commutateur (25), que l'autre contact (25a) du second commutateur (25) est relié à la prise d'extrémité (15) de la batterie (9) et que le contact (24b) encore libre du premier commutateur (24) est relié à une prise d'extrémité (16) de la batterie opposée à la prise d'extrémité (15) de la batterie (9).

7. Dispositif fonctionnant sur batterie selon la revendication 2, caractérisé en ce qu'une ligne située entre le dispositif à diode (18) et le contact (24a) du premier commutateur (24) est reliée à un contact (29b) d'un commutateur (29) dont l'autre contact (29a) est relié à la prise d'extrémité (15) de la batterie (9) ainsi que, par l'intermédiaire d'un étage d'attaque (30) destiné à la fermeture du commutateur (29), à un contact (25a) du second commutateur (25) dont l'autre contact (25b) est relié au contact (24b) encore libre du premier commutateur (24) ainsi que, par l'intermédiaire du moteur à courant continu (22), à une prise d'extrémité (16) de la batterie opposée à la prise d'extrémité (15) de la batterie (9).

8. Dispositif fonctionnant sur batterie selon la revendication 3, caractérisé en ce qu'une ligne située entre le dispositif à diode (18) et le moteur à courant continu (22) est reliée à un contact (29b) d'un commutateur (29) dont l'autre contact (29a) est relié à la prise d'extrémité (15) de la batterie (9) ainsi que, par l'intermédiaire d'un étage d'attaque (30) destiné à la fermeture du commutateur (29), à un contact (25a) du second commutateur (25) dont l'autre contact (25b) est relié au contact (24b) encore libre du premier commutateur (24) ainsi qu'à une prise d'extrémité (16) de la batterie opposée à la prise d'extrémité (15) de la batterie (9).

9. Dispositif fonctionnant sur batterie selon la revendication 1, caractérisé en ce que les moyens sont constitués par un commutateur inverseur (32) dont le contact commun (32c) est relié, par l'intermédiaire du moteur à courant continu (22), à un contact (24a) du premier commutateur (24), dont l'un des contacts inverseurs (32a) est relié à la prise d'extrémité (17) de la batterie (9) et dont l'autre contact inverseur (32b) est relié à la prise d'extrémité (15) de la batterie (9) et, par l'intermédiaire d'un étage d'attaque (33) servant à la commutation du commutateur inverseur (32) d'un contact inverseur à l'autre, au contact (25a) du second commutateur (25) dont l'autre contact (25b) est relié au contact (24b) encore libre du premier commutateur (24) ainsi qu'à une prise d'extrémité (16) de la batterie opposée à la prise d'extrémité (15) de la batterie (9), et qu'une diode de roue libre (36) est montée en parallèle avec le moteur à courant continu (22).

10. Dispositif fonctionnant sur batterie selon la revendication 9, caractérisé en ce que le moteur à courant continu (22) est monté non pas dans la branche du circuit entre le contact (32c) commun du commutateur inverseur (32) et le contact (24a) du premier commutateur (24), mais dans la branche du circuit entre la prise d'extrémité (16) de la batterie et les contacts (24b, 25b) reliés entre eux des premier et second commutateurs (24, 25).

11. Dispositif fonctionnant sur batterie selon l'une des revendications 9 ou 10, caractérisé en ce qu'entre la prise intermédiaire (17) et le contact inverseur (32a) est intercalée une résistance (35).

12. Dispositif fonctionnant sur batterie selon la revendication 11, caractérisé en ce qu'un fusible (34) est monté en série avec la résistance (35).

13. Dispositif fonctionnant sur batterie selon l'une des revendications 2 à 8, caractérisé en ce que le dispositif à diode est une diode à semi-conducteur.

14. Dispositif fonctionnant sur batterie selon l'une des revendications 1 à 13, caractérisé en ce qu'il est divisé en une partie fonctionnelle (A) qui comprend au moins le moteur à courant continu (22) et le dispositif commutateur (23) et en une partie fonctionnelle (B) qui comprend au moins la batterie, et que les deux parties peuvent être reliées électriquement entre elles.

15. Dispositif fonctionnant sur batterie selon la revendication 14, caractérisé en ce que la partie fonctionnelle (A) est conformée en perceuse.

16. Dispositif fonctionnant sur batterie selon l'une des revendications 7 à 9, caractérisé en ce que le commutateur (29) et respectivement le commutateur inverseur (32) sont des commutateurs commandés par relais, et que l'étage d'attaque (30, 33) est une bobine de relais.

17. Dispositif fonctionnant sur batterie selon l'une des revendications 7 à 9, caractérisé en ce que le commutateur (29) et respectivement le commutateur inverseur (32) sont constitués par des composants électroniques et que l'étage d'attaque est agencé pour la commande des composants électroniques.

18. Dispositif fonctionnant sur batterie selon la revendication 17, caractérisé en ce que les composants électroniques sont des transistors ou des thyristors.
